# EUROPEAN PATENT APPLICATION

(11) **EP 2 434 410 A2**
(43) Date of publication of application: **28.03.2012**
(21) Application number: 11195700.7
(22) Date of filing: 15.11.2006
(51) Int. Cl.: G06F 17/00, G01J 5/08, G01J 5/00, G01J 5/60

(54) **All-fiber architecture for an embedded flight sensor for aeropropulsion applications**

(30) Priority: 15.11.2005 US 737453 P
(62) Divisional of application: 06851944.6
(71) Applicant: Zolo Technologies, Inc., Boulder, CO 80301 (US)
(72) Inventor: Sappey, Andrew D., Lakewood, CO 80215 (US); Masterson, Bernard Patrick, Louisville, CO 80027 (US)
(74) Representative: Jansen, Cornelis Marinus

(57) **Abstract**

An embedded flight sensor system having a laser and one or more flight sensors in optical communication with the laser plus a data processing device in optical communication with the flight sensors. The flight sensors may be laser based optical components such as a fiber Bragg grating in combination with an optical detector, a spectroscopy grating and detector or an optical detector associated with catch optics. The parameters sensed by the flight sensors may be used to determine any flight parameter. Representative flight parameters include but are not limited to an airframe or external surface temperature, airstream velocity , combustion zone temperature, engine inlet temperature, a gas concentration or a shock front position.

## Description

### TECHNICAL FIELD

The present invention relates an all fiber sensor architecture ans method for use in embedded flight applications.

### BACKGROUND OF THE INVENTION

Modern aircraft are being developed which feature increasingly sophisticated propulsion systems. In particular, conventional gas turbine engines, SCRAMJET, rocket engine and pulse detonation engine technologies are being designed and built to power future generations of aircraft. In conjunction with the development of advanced engine technologies, airframe and aircraft skin technologies have advanced to develop suitable structures and flight surfaces to support the next generation of aircraft.

In many instances, the technologically advanced modern engine designs plus advanced flight surface structures require onboard feedback and control systems to assure that the various components are performing properly within specific design parameters. For example, the exterior flight surface temperature of a hypersonic aircraft must be monitored to assure that specific heat tolerances are not exceeded. Similarly, the combustion zone of a modern engine must be carefully monitored and controlled to assure that fuel is being used efficiently, maximum thrust is being developed and catastrophic engine failure is avoided. Conventional sensor and feedback technologies are in many instances poorly suited for the monitoring of the flight parameters of modern aircraft designs. A series of independently located and independently operated sensing subsystems can also lead to inconsistent data, since the various sensing subsystems may not be in communication with each other. Discrete sensing systems can also add excess weight and operational complexity. The present invention is directed toward overcoming one or more of the problems discussed above.

### SUMMARY OF THE INVENTION

One aspect of the present invention is an embedded flight sensor system having a laser and one or more flight sensors in optical communication with the laser plus a data processing device in communication with the flight sensors. The flight sensors may be laser based optical components such as a fiber Bragg grating in combination with an optical detector, a spectroscopy grating and detector or an optical detector associated with catch optics. The parameters sensed by the flight sensors may be used to determine any flight parameter. Representative flight parameters include but are not limited to an airframe or external surface temperature, airstream velocity, combustion zone temperature, engine inlet temperature, a gas concentration or a shock front position.

The embedded flight sensor system will typically include multiple flight sensors coupled to the laser with an optical fiber network. In some embodiments, the output from one or more lasers may be configured to supply light to the system at multiple select wavelengths. In such an embodiment, the system may further include a multiplexer, router, circulator, splitter or other photonic component optically coupled to the multiple laser outputs and configured to provide and distribute multiplexed laser light of distinct wavelengths to one or more output optical fibers.

Another aspect of the present invention is a method of deploying a system of flight sensors. The method includes providing a laser coupled to an optical network which communicates with various optical sensors as described above and further communicates with at least one data processing device.

Additional aspects of the present invention include certain optical sensors. Optical sensors consistent with the present invention include a system for measuring an airframe or aircraft skin temperature at multiple locations which features multiple fiber Bragg gratings in optical communication through a network of optical fibers.

Another sensor consistent with the present invention is a system for measuring an engine inlet airstream velocity having multiple pitch and catch optic pairs configured to transmit and receive laser output through the engine inlet at various angles. The engine inlet airstream velocity system also includes a processor to compare the Doppler shift of the spectroscopic absorption curves calculated along various optical paths.

Another sensor consistent with the present invention is a system for determining the location of a shock front within an aircraft engine which includes a laser and multiple pairs of pitch and catch optics configured to project parallel beams through the internal cavity of an aircraft engine.

Another family of sensors consistent with the present invention includes a multiplexed laser source projected through the combustion chamber of an engine such that the laser light received may be spectroscopically analyzed to determine gas concentrations and combustion zone temperatures.

### BRIEF DESCRIPTION OF THE DRAWINGS

FIG. 1: Schematic diagram of a fiber-coupled flight sensor architecture consistent with the present invention.
FIG. 2: Schematic diagram of a FBG temperature measurement sensor consistent with the present invention.
FIG. 3: Graphic representation of FBG temperature sensor data.
FIG. 4: Schematic diagram of a Doppler inlet velocity measurement sensor using 02 spectroscopy.
FIGS. 5a and 5b: Graphic representation of 02 absorption curves illustrating Doppler shifting.
FIG. 6: Schematic diagram of a shock front sensor in a SCRAMJET isolator.
FIG. 7: Graphic representation of beam steering amplitude as a function of time when the sensor beam and shock front are not coincident.
FIG. 8: Graphic representation of beam steering magnitude when the sensor beam and shock front are coincident.

### DETAILED DESCRIPTION OF THE INVENTION

### Optical Fiber Coupled Architecture

The present invention includes an optical fiber coupled system of laser-based sensors for measuring various parameters associated with powered flight. Also disclosed is an architecture for coupling the sensors together into a fully integrated package suitable for embedded flight applications. The ultimate goal of the system and architecture is to acquire data necessary to optimize engine or other flight parameters through feedback control. The system, architecture and sensor technology described herein are appropriate for conventional gas turbine propulsion systems as well as developing SCRAMJET, rocket engine, and pulsed detonation engine technologies. The system may include, but is not limited to, sensors to measure engine inlet flow speed, engine inlet oxygen concentration and temperature. In addition, the temperature and water concentration in the combustion zone plus the position of shock waves in the engine inlet for supersonic and hypersonic applications may be determined. The system also may include sensors having the ability to measure the temperature of various flight control surfaces using optical means. Other sensors not specifically discussed below may be included in the system including emerging technologies such as fiber-optic strain sensors. Those skilled in the art will appreciate that many other types of optical sensors can be incorporated into the disclosed system and architecture as they become available because of the flexibility afforded by the fiber-optic coupling of the sensor system architecture. Advantages of a fiber-optic backbone and optical sensing technology include modular upgradability, electromagnetic noise immunity and the measurement technology being noninvasive. The present invention also includes the architecture necessary to route measurement light to multiple locations simultaneously using standard fiber optic technology largely developed for communications applications.

The embedded flight sensor architecture can in certain embodiments make use of combustion sensing technology that is the subject of commonly owned existing patents and applications. In particular, International Patent Application Serial Number PCT/US2004/010048, METHOD AND APPARATUS FOR THE MONITORING AND CONTROL OF COMBUSTION, filed March 31, 2004, is incorporated herein in its entirety by reference.

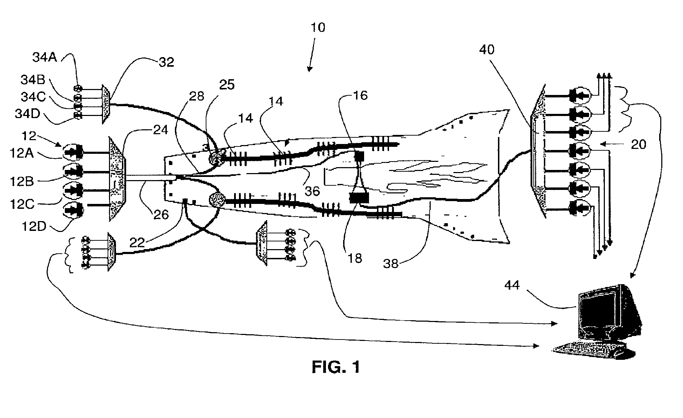

FIG. 1 is a schematic diagram of a system and architecture of optical fiber coupled flight sensors consistent with the present invention. The system 10 includes at least one laser 12 optically coupled to one or more sensors. In all cases the sensors are laser based devices which have as components optical elements such as lenses, mirrors or diffraction gratings plus associated detectors. Representative sensor components include but are not limited to one or more fiber Bragg gratings 14 operatively associated with the airframe or aircraft skin at different locations. Also shown on FIG. 1 are a representative pitch optic 16 and a catch optic 18 optically coupled to a series of wavelength filtered detectors for tunable diode laser absorption spectrometry which elements as described in detail below collectively operate as a combustion zone sensor. Also shown on FIG. 1 is a passive skin emission sensor 22 and various other optical components which together function as an integrated fiber optic sensor architecture.

As described in detail below, the sophistication of certain sensors and measurements associated with the system 10 may be enhanced if laser light at multiple wavelengths is provided for sensing and interrogation purposes. For example, the laser 12 may include multiple subsystems which are capable of outputting laser light at various select wavelengths, shown as elements 12A-D on FIG. 1. Although the schematic diagram of FIG. 1 shows four separate input lasers and four separate input wavelengths, it will be understood by those skilled in the art that any number of input wavelengths may be utilized to accomplish specific sensing goals. In addition, multiple separate lasers, or a lesser number of lasers configured to produce discrete output sources having different frequencies may be employed to provide the laser light having different distinct wavelengths to the system.

The output from lasers 12A-D may be coupled to a lesser number of optical fiber outputs with multiplexer 24. The multiplexed input light may then be split and routed as needed using readily available optical components such as the splitter 26. Multiplexed light may be carried from the foregoing components over a series of optical fibers such as the optical fiber 28 shown on FIG. 1.

In the schematic representation of FIG. 1, the input optical fiber 28 is connected to an optical circulator 30 which may be used to route input light to one or more fiber Bragg gratings 14 and route light from the gratings 14 to an optical demultiplexer 32 and various detectors 34A-D. Together, the fiber Bragg gratings, circulator, demultiplexer and detectors are a system for measuring an airframe temperature at multiple locations which is described in detail below.

FIG. 1 also illustrates a second input optical fiber 36 which carries light from the splitter 26 to a pitch optic 16 operatively associated with the combustion zone of an aeropropulsion engine. The pitch optic is oriented to project multiplexed laser light through the combustion zone to a catch optic 18. The catch optic is optically coupled with an output optical fiber 38 and demultiplexer 40 which in turn provides demultiplexed light to various detectors 20. As is also described in detail below, the detectors receiving output from the combustion zone may be used to perform a tunable diode laser absorption spectroscopy or other apparatus for sensing various combustion zone parameters.

The output for each of the various optical fiber coupled detectors shown schematically on FIG. 1 may ultimately be coupled to an analog to digital converter and a data processing device 44 such as an onboard computer which is configured to extract various types of data from the sensor input.

A non-exclusive family of various types of laser based sensors is shown on FIG. 1. For example, the fiber Bragg grating 14 (FBG) shown attached to flight surfaces in FIG. 1 measures temperature by providing a signal in reflection that varies in wavelength as a function of temperature. Also shown on FIG. 1 is a tunable diode laser absorption spectroscopy system (TDLAS) which may be used to measure several parameters, including water concentration and gas temperature in the combustion zone. The described sensor system architecture may use the same laser or set of laser outputs to interrogate the FBG reflection spectrum, measure water concentration and temperature in the combustion zone and collect other data. The optical fiber architecture of the present invention thus provides a number of advantages over a system where each sensor or type of sensor relies upon a dedicated laser source. In particular, the laser, which is an expensive component and consumes significant amounts of power is heavily leveraged by using its light output to measure several relatively unrelated parameters simultaneously. In addition, one measurement, for example the water absorption in the combustion zone may be used to provide an unambiguous wavelength scale calibration allowing another measurement such as the filter function of the FBG to be tracked in wavelength very accurately.

### Representative Optical Sensor Configurations

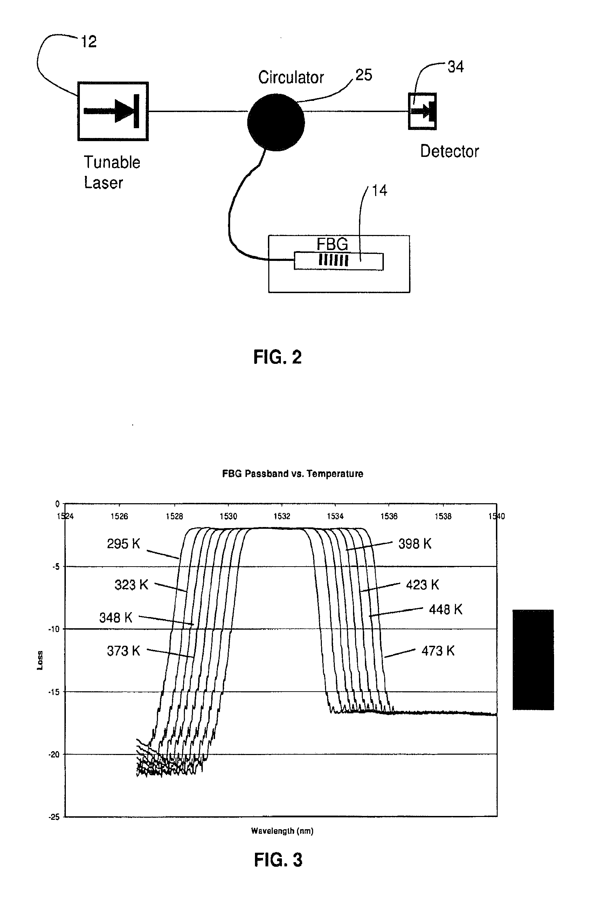

The FBG optical temperature sensors 14 may be operatively disposed at critical locations on the skin of an aircraft or otherwise associated with an airframe. Each fiber Bragg grating 14 can sense a temperature range of only about 80 - 100 C. For hypersonic applications, a much wider range of skin temperatures is encountered; therefore, a method of serially combining FBGs to sense a broad temperature range must be employed. In one aspect of the present invention, multiple FBGs are positioned at each location with each FBG written to reflect in the same wavelength range but over a different temperature range of approximately 100 C. In order to identify which FBG 14 is reflecting and therefore determine the temperature, at least two different methods can be used. First, each FBG 14 could be written to exhibit a slightly different spectral width associated with its reflectance, for example, the width of the reflectance peak can be varied in order to identify which grating is reflecting. This method of preparing FBGs for various temperature ranges works because the gratings consist of refractive index variations written into glass fiber. Glass has an intrinsically high temperature damage threshold and is therefore ideal for measuring the high temperatures experienced by hypersonic aircraft. As shown in FIG. 2, various FBGs located at different locations on an airframe may be connected sequentially to a laser source 12 and detector 34 by an optical circulator 25. As shown graphically on FIG. 3, the transmission filter function of an FBG varies in its peak wavelength with temperature. In particular, the bandpass moves to longer wavelengths as the temperature increases because the physical grating spacing increases as the temperature increases. The thermal expansion coefficient of the glass into which a grating is written determines the slope of a wavelength versus temperature graph. The variation with temperature is quite linear, thus making FBGs an ideal temperature sensor for hypersonic airframes.

An alternative method of determining which grating is reflecting and therefore determining temperature includes providing a significant amount of excess fiber (approximately 100 meters) coiled or otherwise routed between gratings. The laser 12 can be pulsed and the total time delay between sending the pulse and its return (time domain reflectometry) can be used to calculate the position of the grating that is reflecting and therefore indicating the temperature range.

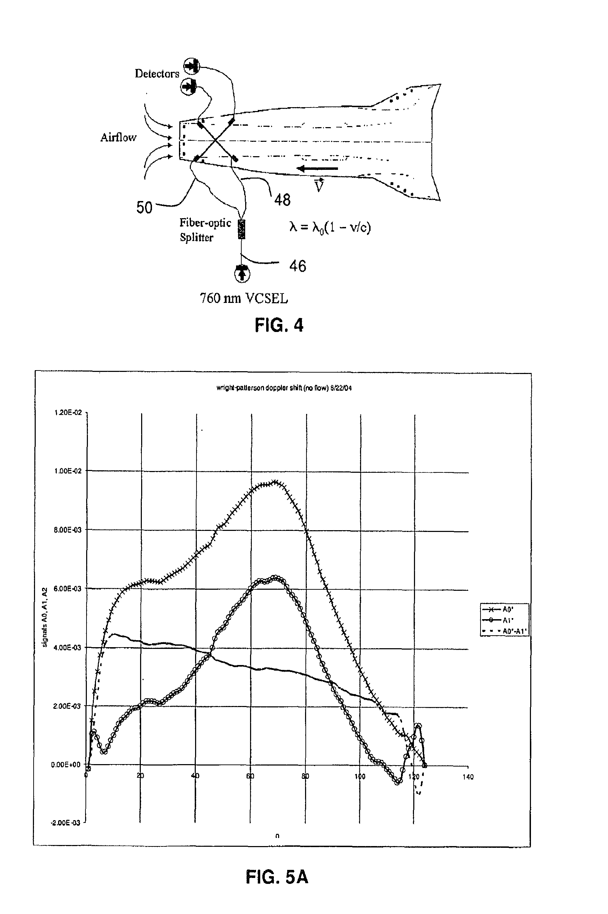

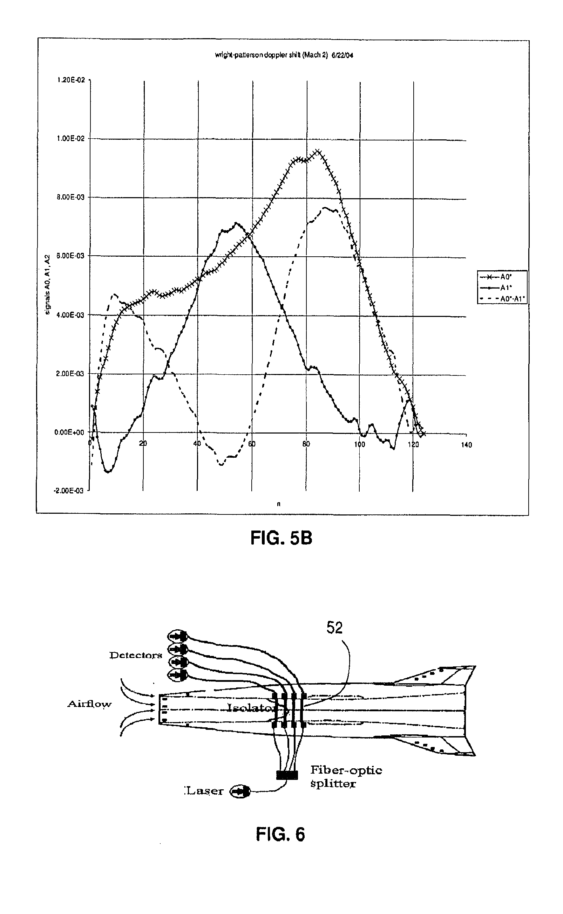

The velocity of the airstream in the engine inlet is a critical quantity for understanding engine dynamics and is very difficult to measure accurately, particularly for supersonic and hypersonic flight. One aspect of the present invention relies upon the Doppler shift of an 02 molecule to make this measurement. For example, frequency modulated tunable diode laser absorption spectroscopy (FM-TDLAS) of the 02 transition in the 760 - 770 nm range may be utilized to measure airflow velocity. As shown in the schematic diagram of FIG. 4, a fiber coupled beam, for example, a 760 nm beam 46 may be split in a splitter with one optical leg 48 directed mostly upstream in the flow and the other optical legal 50 directed mostly downstream in the flow. Actual beam placement in the airflow may be restricted physically by the dimensions of the inlet. The upstream optical legal 48 has its spectroscopic absorption shifted to the red and the peak of the downstream optical leg 50 is shifted to the blue by the Doppler effect. The data shown in FIGS. 5a and 5b depicts data taken in a straight scanned absorption mode. For situations where it is possible to average the data for several hundred milliseconds, scanned absorption works well. However, for faster update rates, higher signal to noise performance is required. This can be obtained by wavelength or frequency modulating the laser. For example, wavelength modulation at approximately 1 MHz combined with lock- in detection techniques can increase the signal to noise ratio. Other modulation rates may be equally suitable. When the laser is wavelength or frequency modulated, lock-in detection techniques then produce a first derivative absorption curve, the zero-crossing of which corresponds to the exact center of the Voigt absorption curve. The difference in the zero-crossing for the upstream and downstream beams then corresponds to the Doppler shift.

760 nm laser light provided from the system laser 12 and optically coupled to other sensors and detectors may also be used to measure inlet oxygen concentration and temperature. These types of measurements may be accomplished by scanning several peaks in the oxygen spectrum using the scanned absorption technique described above. Quantification of temperature and 02 concentration then proceeds using known TDLAS techniques. Generally, TDLAS is performed by the transmission of laser light through a target environment, followed by the detection of the absorption of the laser light at specific wavelengths, due to target gases such as oxygen in the inlet or water in the combustion zone. Spectral analysis of the detected light allows identification of the quantity or temperature of the target gas along the laser path. Effective sensing of temperature or component gasses requires the performance of TDLAS with multiple frequencies of laser light. The frequencies selected must match the absorption lines of a single target gas being monitored. For example, it is useful to monitor oxygen for both the mass calculations described below and to determine temperature in the relatively cool inlet. Water provides a better signal for measurements of temperature in the combustion zone. As described above, wavelength or frequency modulating the laser can be utilized to achieve higher signal to noise ratios. For example, wavelength modulation at approximately 1 MHz combined with lock-in detection techniques can increase the signal to noise ratio. Other modulation rates may be equally suitable.

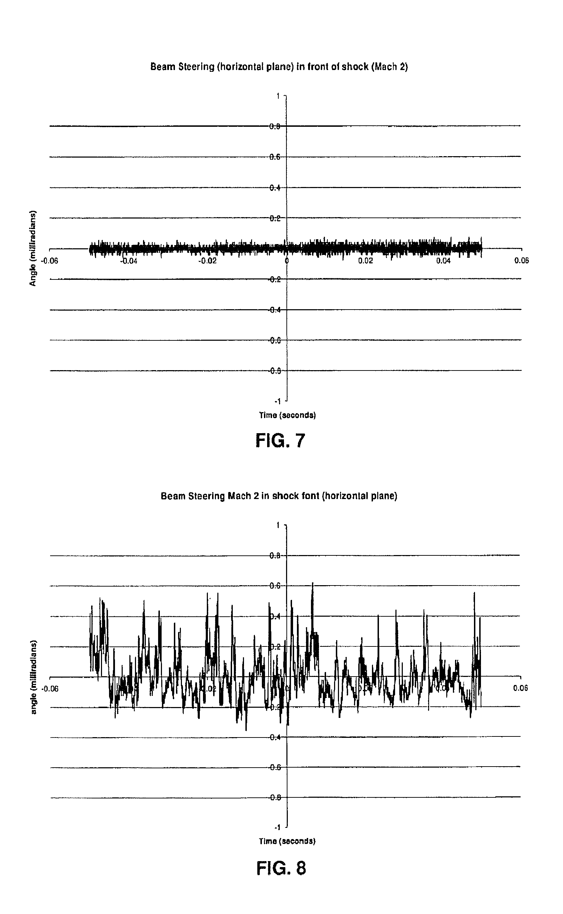

The fiber coupled architecture described herein may also be used to determine a shock front position. FIG. 6 schematically illustrates a series of beams 52 propagating normal to the flow in the isolator section of a SCRAMJET engine. The isolator provides an attachment point for the inlet shock. If the shock proceeds forward into the inlet from the isolator, the engine is snuffed out. The beams 52 may be used to monitor the position of the shock front, by measuring the amount of beam steering associated with each beam. FIGS. 7 and 8 graphically illustrate the effect that is used to sense the position of the shock. When the shock front and a given laser beam are coincident, the laser beam is dramatically steered (FIG. 8). This may be compared to the relatively minimal beam steering of a beam transmitted in front of a shock front (FIG. 7). By setting up receive optics that are tolerant of low levels of beam steering and vibration as shown in FIG. 7 but are intolerant of large beam steering effects as shown in FIG. 8, the position of the shock may be monitored by observing "noise" in the coupling efficiency of the receive optics. Spatial resolution is provided by spacing several beams according to the desire spatial resolution; temporal resolution may be provided by digitizing the signals at several MS/s. One effective method of manipulating the catch optic to provide tolerance to low-level steering and vibration is to overfill the catch optic so that only the center of the Gaussian beam is sampled by the receive optic. After such an adjustment, small beam pointing changes do not significantly change the coupled signal. However, large steering events can cause the signal to be modulated severely as shown in FIG. 8.

Those skilled in the art will appreciate that other fiber-coupled diagnostics are feasible including monitoring passive emission for the combustion zone and observing black body emission from friction heated surfaces to monitor skin temperature.

The objects of the invention have been fully realized through the embodiments disclosed herein. Those skilled in the art will appreciate that the various aspects of the invention may be achieved through different embodiments without departing from the essential function of the invention. The particular embodiments are illustrative and not meant to limit the scope of the invention as set forth in the following claims.

According to an aspect of the invention, there is provided a system for measuring an airframe or aircraft skin temperature at multiple locations comprising:
a laser;
multiple fiber Bragg gratings in optical communication with the laser through a network of optical fibers, each of the fiber Bragg gratings being operatively associated with the airframe or aircraft skin with sets of gratings being operatively positioned at multiple locations; and
a data processing device in optical communication with each fiber Bragg grating through the network of optical fibers, further comprising an excess length of optical fiber between the first and second fiber Bragg grating.

According to a further aspect of the invention, there is provided a system for measuring an engine inlet airstream velocity comprising:
a laser;
a splitter in optical communication with the laser configured to divide output from the laser into at least two optical paths;
a first pitch and catch optic pair configured to transmit and receive laser output through the engine inlet at an upstream angle;
a second pitch and catch optic pair configured to transmit and receive laser output through the engine inlet at a downstream angle;
a detector optically communicating with each optical path; and
a processor in optical communication with the detectors.

Optionally, the processor compares the Doppler shift of a spectroscopic absorption curve calculated for each optical path.

According to a further aspect of the invention, there is provided a system for determining the location of a shock front within an aircraft engine comprising:
a laser;
a splitter in optical communication with the laser configured to divide output from the laser into multiple optical paths;
multiple pairs of pitch and catch optics, at least one pair being associated with each optical path and configured to transmit and receive spaced parallel beams of laser output through the internal cavity of an aircraft engine;
a detector optically communicating with each optical path; and
a processor in optical communication with the detectors.

Optionally, the processor calculates the beam steering associated with at least one beam transmitted through the internal cavity of the aircraft engine.

According to a further aspect of the invention, there is provided a computer program product for deploying a system of flight sensors, which computer program product comprises instructions for causing a processor to perform the step of calculating the beam steering associated with at least one beam transmitted through the internal cavity of the aircraft engine.

## Claims

1. An embedded flight sensor system (10) comprising:
a laser (12) having more than one laser output (12A, 12B, 12C, 12D) configured to emit laser light at multiple select wavelengths;
a multiplexer (24) optically coupled to the multiple laser outputs (12A, 12B, 12C, 12D) and configured to couple laser light of distinct wavelengths to more than one sensor input optical fiber (28, 36);
a first flight sensor (14, 34) in optical communication with the laser (12) via one of the sensor input optical fibers (28), wherein a parameter sensed by the flight sensor (14, 34) may be used to determine at least one of an airframe or external surface temperature and wherein the flight sensor (14, 34) comprises a fiber Bragg grating (14) in combination with a first optical detector (34);
a second flight sensor (16, 18, 40, 20) in optical communication with the laser (12) via another one of the sensor input optical fibers (36), the second flight sensor (16, 18, 40, 20) being operatively associated with the combustion zone of an aeropropulsion engine, the second flight sensor (16, 18, 40, 20) comprising:
a pitch optic (16), and a catch optic (18), the pitch optic being oriented to project multiplexed laser light through the combustion zone to the catch optic (18), and the catch optic (18) being optically coupled with an output optical fiber (38) and a demultiplexer, wherein the demultiplexer (40) provides demultiplexed light to multiple second optical detectors (20);
an analog to digital converter being coupled to electrical outputs of the corresponding first and second optical detectors; and
a data processing device (44) in electrical communication with the flight sensors (34, 20) via the analog to digital convertor, wherein the data processing device (44) is arranged for performing tunable diode laser absorption spectrometric analysis with a digitalized signal from the second flight sensor (16, 18, 40, 20).

2. The embedded flight sensor system (10) of claim 1, wherein at least one of the flight sensors (34, 20) comprises a laser based optical component.

3. The embedded flight sensor system (10) of claim 1, wherein a parameter sensed by the second flight sensor 16, 18, 40, 20) may be used to determine at least one of an airstream velocity, a combustion zone temperature, an engine inlet temperature, a gas concentration, and a shock front position.

4. The embedded flight sensor system (10) of claim 1, wherein the multiple flight sensors (14, 34; 16, 18, 40, 20) are coupled to the laser (12) with an optical fiber network.

5. The embedded flight sensor system (10) of claim 1, wherein more than one flight sensor (14, 34; 16, 18, 40, 20) is in optical communication with the sensor input optical fiber (28, 36).

6. The embedded flight sensor system (10) according to claim 1 for measuring an airframe or aircraft skin temperature at multiple locations, comprising:
multiple fiber Bragg gratings (14) in optical communication with the laser (12) through a network of optical fibers (28), each of the fiber Bragg gratings (14) being operatively associated with an airframe or aircraft skin with sets of gratings being operatively positioned at multiple locations, wherein the data processing device (44) is in optical communication with each fiber Bragg grating (14) through the network of optical fibers.

7. The embedded flight sensor system (10) for measuring an airframe or aircraft skin temperature at multiple locations of claim 6, wherein one fiber Bragg grating (14) has a spectral width associated with reflectance which is different that a spectral width associated with reflectance of another fiber Bragg grating (14).

8. A method of deploying a system (10) of flight sensors (14, 34; 16, 18, 40, 20) comprising:
providing laser light from multiple laser outputs (12A, 12B, 12C, 12D) associated with a laser (12), the laser outputs (12A, 12B, 12C, 12D) emitting laser light at multiple select wavelengths;
optically coupling a multiplexer (24) to the multiple laser outputs (12A, 12B, 12C, 12D);
multiplexing the laser using the multiplexer (24);
optically coupling the laser light of distinct wavelengths to at least two flight sensors (14, 34; 16, 18, 40, 20) by more than one sensor input optical fiber (28, 36), wherein a parameter sensed by a first flight sensor (14, 34) is used to determine at least an airframe or external surface temperature, the first flight sensor (14, 34) comprising a fiber Bragg grating (14) in combination with a first optical detector (34), and wherein a second flight sensor (16, 18, 40, 20) is operatively associated with the combustion zone of an aeropropulsion engine;
projecting multiplexed laser light coupled to the second flight sensor (16, 18, 40, 20) through the combustion zone from a pitch optic (16) of the second flight sensor (16, 18, 40, 20) to a catch optic (18) of the second flight sensor (16, 18, 40, 20);
optically coupling a demultiplexer (40) to the catch optic (18), the demultiplexer (40) providing demultiplexed light to various second optical detectors (20);
coupling the first and second optical detectors (34, 20) to an analog to digital convertor;
converting the analog output of the optical detectors (34, 20) to a digital signal;
coupling the flight sensors (14, 34; 16, 18, 40, 20) to a data processing device (44) via the analog to digital convertor;
providing the digital signal to the data processing device (44); and
performing tunable diode laser absorption spectrometric analysis with the digitalized signal from the second flight sensor (16, 18, 40, 20).

9. The method of deploying a system (10) of flight sensors of claim 8, wherein a parameter sensed by the second flight sensor (16, 18, 40, 20) is used to determine at least one of an airstream velocity, a combustion zone temperature, an engine inlet temperature, a gas concentration, and a shock front position.
